# EUROPÄISCHE PATENTSCHRIFT

(11) **EP 3 600 925 B1**
(45) Veröffentlichungstag und Bekanntmachung des Hinweises auf die Patenterteilung: **24.06.2026**
(21) Anmeldenummer: 18715535.3
(22) Anmeldetag: 21.03.2018
(51) Int. Cl.: B60G 17/052, B60T 7/12

(54) **FAHRZEUG**
VEHICLE
VÉHICULE

(30) Priorität: 27.03.2017 DE 102017106523
(43) Veröffentlichungstag der Anmeldung: 05.02.2020
(73) Patentinhaber: KNORR-BREMSE Systeme für Nutzfahrzeuge GmbH, 80809 München (DE)
(72) Erfinder: SKRABAK, Attila, 1224 Budapest (HU); CSONTOS, Peter, 1119 Budapest (HU); UDVARDY, Oliver, 1118 Budapest (HU)
(86) Internationale Anmeldenummer: PCT/EP2018/057162
(87) Internationale Veröffentlichungsnummer: WO 2018/177838

(56) Entgegenhaltungen:
- EP-A1- 1 800 916
- EP-A1- 2 631 095
- DE-A1- 102014 012 549
- DE-A1- 102014 107 218
- DE-A1- 19 648 174
- DE-B3- 102014 013 744
- JP-A- 2008 137 423

## Beschreibung

Die vorliegende Erfindung bezieht sich auf ein Fahrzeug mit einer Luftfederung. Die Luftfederung eines Fahrzeugs kann zur Niveauregelung, also zur Regelung einer Höhe der Karosserie über Grund, verwendet werden.

Die EP 2 631 095 A1 offenbart ein Verfahren zur Niveauregelung für ein Fahrzeug.

Wenn eine Aktivierung der Luftfederung nicht zu einer Niveauänderung führt, werden unter Verwendung des EBS-Moduls kurzzeitige Bremslösungen ausgelöst, um den Rädern des Fahrzeugs eine Bewegung zu ermöglichen.

Die EP 1 800 916 A1 offenbart ein Verfahren zur Niveauänderung für ein Fahrzeug.

Hierzu wird ein Niveauänderungssignal aufgenommen, woraufhin Steuersignale an die Luftfedern zur Änderung der Niveaueinstellung und zum anderen während und/oder nach der Niveauänderung Steuersignale an die Bremsen zum alternierenden Lösen und Feststellen der Bremsen der linken und rechten Seite ausgegeben werden.

Die JP 2008137423 A offenbart den Oberbegriff des Anspruchs 1 und beschreibt ein Verfahren zur Niveauregelung für ein Fahrzeug.

Wenn das Fahrzeug auf einer Ebene steht, werden während der Niveauregelung sowohl die Parkbremse als auch die Betriebsbremse gelöst. Wenn das Fahrzeug an einem Hang steht, werden während der Niveauregelung die Parkbremse aktiviert und die Betriebsbremse abhängig von der Hangneigung etwas mehr oder weniger gelöst.

Die DE 196 48174 A1 offenbart ein Verfahren zur Niveauänderung für ein Fahrzeug.

Dabei wird zunächst die Feststellbremse betätigt und anschließend die Bremswirkung der Feststellbremse an einer Achse aufgehoben, damit diese Achse während der Niveauänderung eine Ausgleichsbewegung durchführen kann.

Vor diesem Hintergrund ist es die Aufgabe der vorliegenden Erfindung ein verbessertes Fahrzeug zu schaffen.

Diese Aufgabe wird durch ein Fahrzeug gemäß dem Anspruch 1 gelöst.

Ein nicht beanspruchtes Verfahren zur Niveauregelung für ein Fahrzeug mit zumindest einer ersten Achse mit ersten Rädern, ersten Parkbremsen einer Parkbremseinrichtung und ersten Betriebsbremsen einer Betriebsbremseinrichtung, und mit einer zweiten Achse mit zweiten Räder, zweiten Parkbremsen der Parkbremseinrichtung und zweiten Betriebsbremsen der Betriebsbremseinrichtung, wobei die erste Achse eine erste Luftfederung und/oder die zweite Achse eine zweite Luftfederung aufweist, umfasst die folgenden Schritte:
Einlesen eines Niveauänderungssignals, das eine durchzuführende Niveauänderung anzeigt;
Bereitstellen eines Parkbremslösesignal an eine Schnittstelle zu einem zum Lösen und Festzustellen der Parkbremseinrichtung ausgebildeten Parkbremsventil ansprechend auf das Niveauänderungssignal, wobei das Parkbremslösesignal ausgebildet ist, um das Parkbremsventil zum Lösen der Parkbremseinrichtung anzusteuern; und
Bereitstellen eines ersten Steuersignals an eine Schnittstelle zu einem ersten Ventil der ersten Luftfederung und/oder eines zweiten Steuersignals an eine Schnittstelle zu einem zweiten Ventil der zweiten Luftfederung unter Verwendung des Niveauänderungssignals, um die Niveauänderung durchzuführen.

Bei dem Fahrzeug kann es sich beispielsweise um ein Nutzfahrzeug, beispielsweise einen Lastkraftwagen oder um ein Fahrzeug zur Personenbeförderung handeln. Eine Luftfederung kann zumindest einen Luftfederbalg umfassen über den eine Achse des Fahrzeugs mit der Karosserie des Fahrzeugs gekoppelt werden kann. Durch eine entsprechende Belüftung oder Entlüftung des Luftfederbalgs kann sowohl ein gewünschtes Feder- und Dämpfungsverhalten der Luftfederung als auch ein gewünschter Abstand zwischen der Achse und der Karosserie eingestellt werden. Ist nur an einer Achse eine Luftfederung vorgesehen, so kann an der anderen Achse eine andersartige Federung, beispielsweise eine Stahlfeder, vorgesehen sein. Die Parkbremseinrichtung kann ausgebildet sein, um ein Wegrollen des Fahrzeugs im geparkten Zustand zu verhindern. Dazu kann die Parkbremseinrichtung sowohl an der ersten Achse als auch an der zweiten Achse zumindest eine Parkbremse zum Feststellen zumindest eines der jeweiligen Achse zugeordneten Rads aufweisen. Das Parkbremsventil kann zum einen ausgebildet sein, um die Parkbremseinrichtung festzustellen, wenn das Fahrzeug parkt und freizugeben wenn das Fahrzeug fährt, und zum anderen ausgebildet sein, um die Parkbremseinrichtung freizugeben, wenn die Niveauänderung durchgeführt wird. Die Betriebsbremseinrichtung kann verwendet werden, um das Fahrzeug während der Fahrt abzubremsen. Dazu kann die Betriebsbremseinrichtung sowohl an der ersten Achse als auch an der zweiten Achse zumindest eine Betriebsbremse zum Bremsen zumindest eines der jeweiligen Achse zugeordneten Rads aufweisen. Dabei können Parkbremse und Betriebsbremse eines Rads separat oder kombiniert ausgeführt sein, beispielsweise ein und dieselbe Bremsscheibe verwenden.

Das Verfahren umfasst einen Schritt des Bereitstellens eines Betriebsbremsfeststellsignals an eine Schnittstelle zu der Betriebsbremseinrichtung umfassen. Der Schritt des Bereitstellens erfolgt ansprechend auf das Niveauänderungssignal. Dabei ist das Betriebsbremsfeststellsignal ausgebildet, um ein Feststellen einer der ersten Achse oder der zweiten Achse zugeordneten Betriebsbremse der Betriebsbremseinrichtung zu bewirken. Auf diese Weise kann ein Wegrollen des Fahrzeugs verhindert werden, wenn die Parkbremseinrichtung während der Niveauänderung gelöst ist.

Beispielsweise kann im Schritt des Einlesens das Niveauänderungssignal über eine Schnittstelle zu einem Steuergerät einer elektronische Niveauregelung (ELC) eingelesen werden. Ist ein entsprechendes System zur elektronischen Niveauregelung vorgesehen, so kann ein typischerweise ohnehin von der elektronischen Niveauregelung bestimmtes Signal vorteilhaft zur Ansteuerung der Parkbremseinrichtung und gegebenenfalls der Betriebsbremseinrichtung verwendet werden.

Im Schritt des Bereitstellens des Parkbremslösesignals kann das Parkbremslösesignal unter Verwendung eines Steuergeräts einer elektronischen Parkbremse (EPB) bereitgestellt werden. Auf diese Weise kann ein elektronisches Parkbremssystem vorteilhaft zur Umsetzung des beschriebenen Ansatzes verwendet werden.

Im Schritt des Bereitstellens des Betriebsbremsfeststellsignals kann das Betriebsbremsfeststellsignal unter Verwendung eines Steuergeräts eines elektronischen Bremssystems bereitgestellt werden. Auf diese Weise kann ein elektronischen Bremssystem vorteilhaft zur Umsetzung des beschriebenen Ansatzes verwendet werden.

Dieses nicht beanspruchte Verfahren kann beispielsweise in Software oder Hardware oder in einer Mischform aus Software und Hardware beispielsweise in einem Steuergerät implementiert sein. Der hier vorgestellte Ansatz schafft somit ferner eine nicht beanspruchte Vorrichtung, die ausgebildet ist, um die Schritte einer Variante eines hier vorgestellten Verfahrens in entsprechenden Einrichtungen durchzuführen, anzusteuern bzw. umzusetzen.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Eine entsprechende nicht beanspruchte Vorrichtung zur Niveauregelung für ein Fahrzeug mit zumindest einer ersten Achse mit einer ersten Luftfederung und/oder einer zweiten Achse mit einer zweiten Luftfederung, einer Parkbremseinrichtung und einer Betriebsbremseinrichtung, weist somit geeignete Einrichtungen zum Durchführen der Schritte des genannten Verfahrens zur Niveauregelung auf.

Dabei kann die nicht beanspruchte Vorrichtung ein Steuergerät einer elektronische Niveauregelung zum Bereitstellen des Niveauänderungssignals und ein Steuergerät einer elektronischen Parkbremse aufweisen. Dabei kann das Steuergerät der elektronischen Parkbremse ausgebildet sein, um das Niveauänderungssignal über eine Schnittstelle zu dem Steuergerät der elektronischen Niveauregelung einzulesen und das Parkbremslösesignal unter Verwendung des Niveauänderungssignals zu bestimmen und bereitzustellen.

Ferner kann die nicht beanspruchte Vorrichtung ein Steuergerät eines elektronischen Bremssystems aufweisen, das ausgebildet sein kann, um das Niveauänderungssignal über eine Schnittstelle zu dem Steuergerät der elektronischen Niveauregelung einzulesen und das Betriebsbremsfeststellsignal unter Verwendung des Niveauänderungssignals zu bestimmen und bereitzustellen.

Ein entsprechendes nicht beanspruchte Fahrzeug mit zumindest einer ersten Achse mit einer ersten Luftfederung und/oder einer zweiten Achse mit einer zweiten Luftfederung, einer Parkbremseinrichtung, einem zum Lösen und Festzustellen der Parkbremseinrichtung ausgebildeten Parkbremsventil, einer Betriebsbremseinrichtung kann somit vorteilhaft eine genannte Vorrichtung zur Niveauregelung aufweisen. Dabei kann die Vorrichtung ausgebildet sein, um das Parkbremslösesignal an eine Schnittstelle zu dem Parkbremsventil, das erste Steuersignal an Schnittstelle zu einem ersten Ventil der ersten Luftfederung und das zweite Steuersignal an eine Schnittstelle zu einem zweiten Ventil der zweiten Luftfederung bereitzustellen.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung einer Niveauregelung eines Fahrzeugs gemäß einem nicht beanspruchten Beispiel;
Fig. 2 eine schematische Darstellung eines Fahrzeugs mit einer Vorrichtung zur Niveauregelung;
Fig. 3 eine schematische Darstellung eines Fahrzeugs mit einer Vorrichtung zur Niveauregelung gemäß einem nicht beanspruchten Beispiel;
Fig. 4 eine schematische Darstellung eines Fahrzeugs mit einer Vorrichtung zur Niveauregelung gemäß einem Ausführungsbeispiel; und
Fig. 5 ein Ablaufdiagramm eines Verfahrens zur Niveauregelung gemäß einem Ausführungsbeispiel.

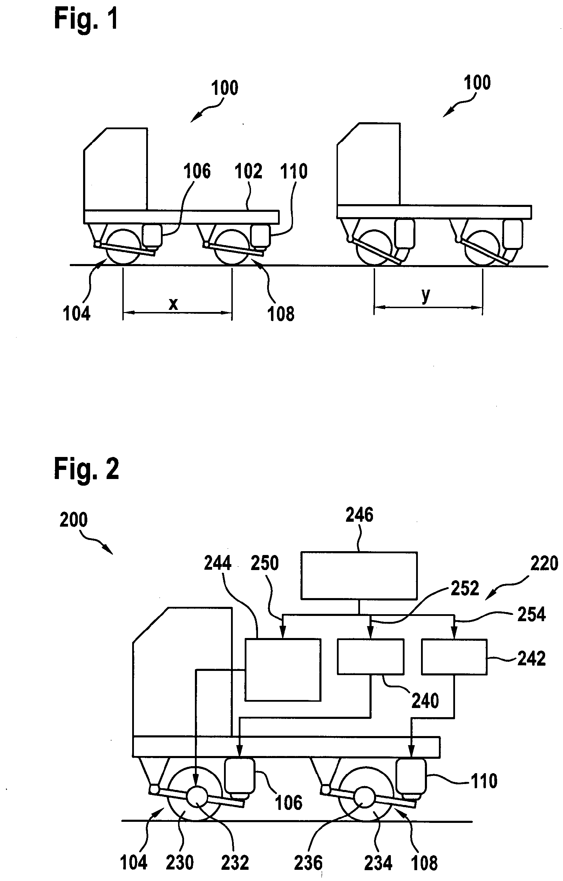

Fig. 1 zeigt eine schematische Darstellung eines Fahrzeugs 100 während der Durchführung einer Niveauregelung gemäß einem nicht beanspruchten Beispiel. In der linken Darstellung ist das Fahrzeug 100 mit einer ersten Karosseriehöhe, hier einem niedrigen Niveau, und in der rechten Darstellung ist dasselbe Fahrzeug 100 mit einer zweiten Karosseriehöhe, hier einem hohen Niveau, gezeigt.

Das Fahrzeug 100 umfasst eine Karosserie 102 und beispielhaft eine erste Achse 104 mit einer zugeordneten ersten Federeinrichtung 106 und eine zweite Achse 108 mit einer zugeordneten zweiten Federeinrichtung 110. Die Federeinrichtungen 106, 110 sind zwischen der Karosserie 102 und freien Enden von Achshebeln angeordnet. Den freien Enden gegenüberliegende Enden der Achshebel sind über Lager schwenkbar mit der Karosserie 102 verbunden. Die Achshebel sind ferner ausgeformt, um Achswellen der Achsen 104, 108 zu tragen.

Beispielhaft handelt es sich bei der ersten Achse um die Vorderachse und bei der zweiten Achse um die Hinterachse des Fahrzeugs 100. Gemäß einem Ausführungsbeispiel umfasst das Fahrzeug 100 nur eine luftgefederte Achse. In diesem Fall kann der hier beschriebene Ansatz in entsprechender Weise angewendet werden. Beispielsweise kann das Verfahren auch für Fahrzeuge angewendet werden, die vorne eine Stahlfeder oder irgendeine andere von einer Luftfederung abweichende Federung aufweisen, und hinten eine Luftfederung aufweisen.

In der linken Darstellung des Fahrzeugs 100 sind Federbälge der Federeinrichtungen 106, 110 in einem zumindest teilweise entlüfteten Zustand gezeigt, sodass eine Längsausdehnung der Federbälge geringer als eine maximale Längsausdehnung ist. Daraus resultiert eine geringe Karosseriehöhe.

In der rechten Darstellung des Fahrzeugs 100 sind die Federbälge der Federeinrichtungen 106, 110 in einem zumindest teilweise belüfteten Zustand gezeigt, sodass eine Längsausdehnung der Federbälge größer als eine minimale Längsausdehnung ist. Daraus resultiert eine hohe Karosseriehöhe.

Eine Veränderung der Längsausdehnung der Federbälge der Federeinrichtungen 106, 110 führt zu einer Veränderung der Stellung der Achshebel und dadurch zu einer Veränderung des Abstands zwischen den Achsen 104, 108. In der links gezeigten Darstellung des Fahrzeugs 100 weist der Abstand zwischen den Achsen 104, 108 den Wert x und in der rechts gezeigten Darstellung den sich von dem Wert x unterscheidenden Wert y auf.

Wenn bei dem mit der Luftfederung 106, 110 ausgerüsteten Fahrzeug 100 eine Änderung der Karosseriehöhe auch eine Änderung des Abstands zwischen den Achsen 104, 106 bewirkt, so kann die Änderung der Karosseriehöhe nur dann durchgeführt werden, wenn eine Parkbremse des Fahrzeugs 100 entweder nicht aktiviert oder nur in einer Achsgruppe aktiviert ist, sodass zumindest die Räder einer Achsgruppe rollen können und die Bewegung der Karosserie 102 nicht blockiert wird.

Fig. 2 zeigt eine schematische Darstellung eines Fahrzeugs 200 mit einer Vorrichtung 220 zur Niveauregelung. Wie anhand von Fig. 1 beschrieben, weist das Fahrzeug 200 zwei Achsen 104, 106 mit Luftfederungen 106, 110 auf.

Die erste Achse 104 umfasst erste Räder 230 und erste Park- und Betriebsbremsen 232. Die zweite Achse 106 umfasst zweite Räder 234 und zweite Park- und Betriebsbremsen 236.

Das Fahrzeug 200 umfasst ein erstes Ventil 240, hier ein vorderes Ventil, zum Belüften und Entlüften der ersten Federeinrichtung 106 und ein zweites Ventil 242, hier ein hinteres Ventil, zum Belüften und Entlüften der zweiten Federeinrichtung 110. Ferner umfasst das Fahrzeug 200 ein Parkbremslöseventil 244, das ausgebildet ist, um die Parkbremse 232 zu lösen. Die Ventile 240, 242, 244 können Teil der Vorrichtung 220 sein. Die Vorrichtung 220 zur Niveauregelung umfasst ein Steuergerät 246 zur elektronischen Niveauregelung, das ein Steuersignal 250 zum Steuern des Ventils 244 und Steuersignale 252, 254 zum Steuern der Ventile 240, 242 bereitstellt.

Die Parkbremse einer Achse 104, 106, hier beispielhaft der vorderen Achse 104, kann somit unter Verwendung des separaten Ventils 244 gelöst werden, das durch das Steuergerät 246 gesteuert wird, das über die Niveauregulierungsaktivität informiert.

Gemäß einem nicht beanspruchten Beispiel sind die Ventile 240, 242 Teile der Federeinrichtungen 106, 110.

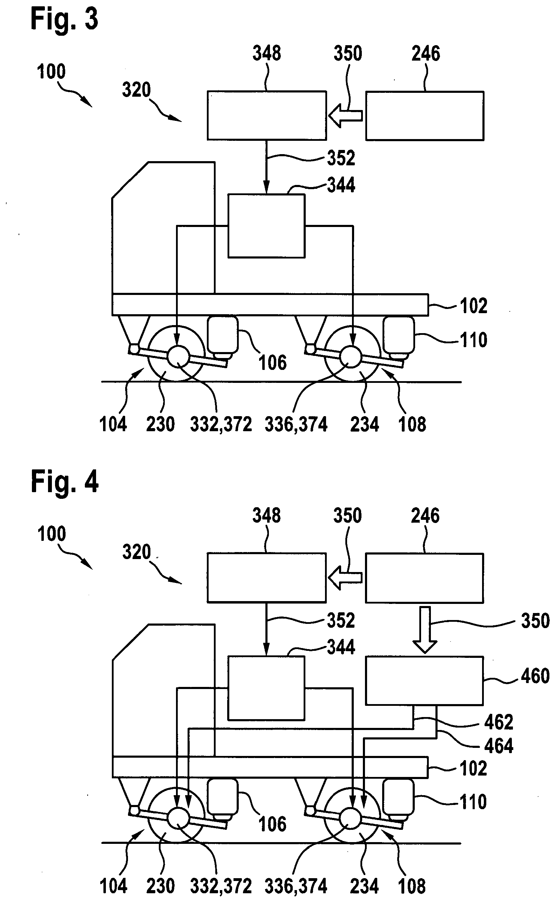

Fig. 3 zeigt eine schematische Darstellung eines Fahrzeugs 100 mit einer Vorrichtung 320 zur Niveauregelung gemäß einem nicht beanspruchten Beispiel, das nicht alle Merkmale der Erfindung zeigt. Wie anhand von Fig. 2 beschrieben, weist das Fahrzeug 100 zwei Achsen 104, 108 mit Luftfederungen 106, 110 auf. Die erste Achse 104 umfasst erste Räder 230 und erste Parkbremsen 332. Die zweite Achse 108 umfasst zweite Räder 234 und zweite Parkbremsen 336. Das Fahrzeug 100 umfasst gemäß einem Ausführungsbeispiel ferner Ventile zum Belüften und Entlüften von Luftbälgen der Federeinrichtungen 106, 110, wie es in Fig. 2 gezeigt ist. Ferner umfasst das Fahrzeug 100 Betriebsbremsen 372, 374, wie es nachfolgend anhand von Fig. 4 näher beschrieben ist.

Das Fahrzeug 100 umfasst ein Parkbremsventil 344, das ausgebildet ist, um die Parkbremsen 332, 336 festzustellen und zu lösen. Im Unterschied zu dem anhand von Fig. 2 gezeigten Fahrzeug weist das Fahrzeug 100 kein separates Parkbremslöseventil zum Lösen einer der Parkbremsen 332, 336 auf. Gemäß einem Ausführungsbeispiel ist das Ventil 344 Teil der Vorrichtung 320.

Die Vorrichtung 320 umfasst ein Steuergerät 246 zur elektronischen Niveauregelung und ein Steuergerät 348 einer elektronischen Parkbremse. Die Steuergeräte 246, 348 sind über eine geeignete Kommunikationsleitung oder Kommunikationsschnittstelle miteinander verbunden.

Gemäß einem nicht beanspruchten Beispiel ist das Steuergerät 246 ausgebildet, um ein Niveauänderungssignal 350 bereitzustellen, das eine Information über eine unter Verwendung der Federeinrichtungen 106, 110 durchzuführende Niveauänderung der Karosserie 102 des Fahrzeugs 100 umfasst. Das Steuergerät 348 ist gemäß diesem Ausführungsbeispiel ausgebildet, um das Niveauänderungssignal 350 einzulesen und zum Bestimmen eines Parkbremslösesignals 352 zu verwenden. Beispielsweise ist das Steuergerät 348 ausgebildet, um das Parkbremslösesignal 352 zu bestimmen, sobald das Niveauänderungssignal 350 empfangen wird. Das Steuergerät 348 ist ausgebildet, um das Parkbremslösesignal 352 an das Ventil 344 bereitzustellen. Das Parkbremslösesignal 352 ist geeignet, um das Ventil 344 so anzusteuern, dass die Parkbremsen 332, 336 freigegeben werden. Dadurch werden die Räder 230, 234 nicht mehr durch die Parkbremsen 332, 336 blockiert.

Gemäß einem nicht beanspruchten Beispiel ist das Steuergerät 246 ausgebildet, um Steuersignale an Ventile der Luftfederungen 106, 110 bereitzustellen, um die Niveauänderung durchzuführen. Beispielsweise ist das Steuergerät 246 ausgebildet, um die Steuersignale nach oder zeitgleich zu dem Parkbremslösesignal 352 bereitzustellen.

Im Unterschied zu Fig. 2 wird bei dem anhand von Fig. 3 beschriebenen nicht beanspruchten Beispiel anstelle eines separaten Ventils die Funktion zum Lösen der Parkbremsen 332, 336 in das Ventil 344 integriert, das für die Aktivierung oder Lösung der Parkbremse 332, 336 verantwortlich ist.

Gemäß einem nicht beanspruchten Beispiel ist das Ventil 344 als ein einziges Bauteil ausgeführt. Somit kann ein einziges Bauteil verwendet werden, um die Parkbremsen 332, 336 festzustellen, wenn das Fahrzeug 100 parkt und freizugeben wenn das Fahrzeug 100 fährt, und zum anderen verwendet werden, um die Parkbremsen 332, 336 freizugeben, wenn die durchzuführende Niveauänderung durch das Niveauänderungssignal 350 angezeigt wird.

Fig. 4 zeigt eine schematische Darstellung eines Fahrzeugs 100 mit einer Vorrichtung 320 zur Niveauregelung gemäß einem Ausführungsbeispiel. Im Unterschied zu der in Fig. 3 gezeigten Vorrichtung umfasst die in Fig. 4 gezeigte Vorrichtung 320 ferner ein Steuergerät 460 eines elektronischen Bremssystems. Das Steuergerät 460 ist ausgebildet, um das Niveauänderungssignal 350 oder ein entsprechendes Signal über eine geeignete Schnittstelle zu dem Steuergerät 246 der elektronischen Niveauregelung einzulesen und zum Bestimmen zumindest eines Betriebsbremsfeststellsignals 462, 464 zu verwenden. Das Steuergerät 460 ist gemäß einem Ausführungsbeispiel ausgebildet, um das Betriebsbremsfeststellsignal 462 an eine der ersten Achse 104 zugeordnete Betriebsbremse 372 bereitzustellen. Das Betriebsbremsfeststellsignal 462 ist dabei ausgebildet, um die Betriebsbremse 372 festzustellen. Gemäß einem weiteren Ausführungsbeispiel ist das Steuergerät 460 zusätzlich oder alternativ ausgebildet, um das Betriebsbremsfeststellsignal 464 an eine der zweiten Achse 108 zugeordnete Betriebsbremse 374 bereitzustellen. Das Betriebsbremsfeststellsignal 464 ist dabei ausgebildet, um die Betriebsbremse 374 festzustellen.

Beispielsweise ist das Steuergerät 460 ausgebildet, um zumindest eines der Betriebsbremsfeststellsignale 462, 464 zeitgleich mit dem Parkbremslösesignal 352 oder nach einer Gegenprobe mit Bremsfunktionen bereitzustellen.

Anstelle eines separaten Ventils, wie in Fig. 2 gezeigt, kann die Nieveauverstellungsaktivität durch eine Kombination der elektronischen Niveauregelung (ELC), realisiert durch das Steuergerät 246, der elektronischen Parkbremse (EPB), realisiert durch das Steuergerät 348 und des elektronischen Bremssystems (EBS), realisiert durch das Steuergerät 460, dadurch gelöst werden, dass das Steuergerät 246 für die elektronische Niveauregelung das Steuergerät 348 für die elektronische Parkbremse und das Steuergerät 460 des elektronischen Bremssystems über eine Kommunikationsschnittstelle darüber informiert, dass das Niveau der Karosserie 102 anzupassen ist. Ansprechend auf diese Information, die beispielsweise über das Niveauänderungssignal 350 übertragen wird, ist zum einen das Steuergerät 348 des elektronischen Bremssystems ausgebildet, um die Parkbremse 332, 336 an einer oder allen Achsen 104, 108 zu lösen, beispielsweise durch Bereitstellung des Parkbremslösesignals 352, und zum anderen ist das Steuergerät 460 des elektronischen Bremssystems ausgebildet, um eine der Achsen 104, 108 zu bremsen und die andere der Achsen 104, 108 rollen zu lassen, beispielsweise durch Bereitstellung eines der Signale 462, 464.

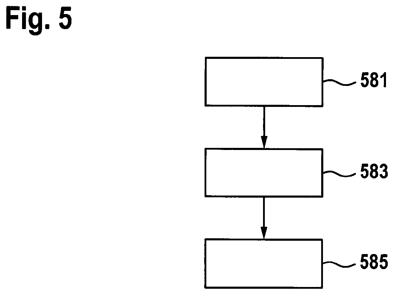

Fig. 5 zeigt ein Ablaufdiagramm eines Verfahrens zur Niveauregelung gemäß einem Ausführungsbeispiel. Das Verfahren kann beispielsweise unter Verwendung einer Vorrichtung durchgeführt werden, wie sie anhand der Figur 4 beschrieben ist.

In einem Schritt 581 wird ein Niveauänderungssignal eingelesen, das eine durchzuführende Niveauänderung anzeigt. Durch die Niveauänderung wird die Karosserie beispielsweise angehoben, wie es anhand von Fig. 1 gezeigt ist. In einem Schritt 583 wird ein Parkbremslösesignal an eine Schnittstelle zu einem zum Lösen und Festzustellen der Parkbremseinrichtung ausgebildeten Parkbremsventil bereitgestellt.

Die Bereitstellung erfolgt dabei ansprechend auf das Einlesen des Niveauänderungssignals. In einem Schritt 585 wird ein erstes Steuersignal an Schnittstelle zu einem ersten Ventil der ersten Luftfederung und/oder ein zweites Steuersignal an eine Schnittstelle zu einem zweiten Ventil der zweiten Luftfederung bereitgestellt. Das oder die Steuersignale werden dabei unter Verwendung des Niveauänderungssignals bereitgestellt, um die durch das Niveauänderungssignal angezeigte Niveauänderung durchzuführen.

Das Verfahren eignet sich zum Lösen einer Parkbremse bei einem Fahrzeug mit einer Luftfederung. Dabei erfolgt gemäß einem Ausführungsbeispiel eine Integration der Parkbremslösung im Falle einer Anforderungsfunktion zur Änderung der Karosseriehöhe in das elektronische Parkbremssystem. Eine Verteilung der Parkbremslösung erfolgt im Falle einer Anforderungsfunktion zur Änderung der Karosseriehöhe in die elektronische Höhenverstellungssteuerung, sowie ein Betreiben der Brems- und Parkbremssteuerungssteuergeräte so, dass für den Fall, dass die elektronische Niveauregelung (ELC) die Karosseriehöhe verändern möchte, die elektronische Niveauregelung (ELC) die elektronische Parkbremse (EPB) darüber informiert, dass die elektronische Parkbremse (EPB) die Parkbremse löst, und das elektronische Bremssystem (EBS) darüber informiert, dass das elektronische Bremssystem (EBS) die Betriebsbremsen an zumindest einer Achse aktiviert.

### BEZUGSZEICHENLISTE

- 100: Fahrzeug
- 104: erste Achse
- 106: erste Luftfederung
- 108: zweite Achse
- 110: zweite Luftfederung

- 200: Fahrzeug
- 220: Vorrichtung zur Niveauregelung
- 230: erste Rad
- 232: erste Park- und Betriebsbremse
- 234: zweites Rad
- 236: zweite Park- und Betriebsbremse
- 240: erstes Ventil
- 242: zweites Ventil
- 244: Parkbremslöseventil
- 246: Steuergerät zur elektronischen Niveauregelung
- 250: Steuersignal
- 252: Steuersignal
- 254: Steuersignal

- 320: Vorrichtung zur Niveauregelung
- 332: erste Parkbremse
- 336: zweite Parkbremse
- 344: Parkbremsventil
- 348: Steuergerät einer elektronischen Parkbremse
- 350: Niveauänderungssignal
- 352: Parkbremslösesignal
- 372: erste Betriebsbremse
- 374: zweite Betriebsbremse

- 460: Steuergerät eines elektronischen Bremssystems
- 462: erstes Betriebsbremsfeststellsignal
- 464: zweites Betriebsbremsfeststellsignal

- 581: Schritt des Einlesens
- 583: Schritt des Bereitstellens
- 585: Schritt des Bereitstellens

## Patentansprüche

1. Zweiachsiges Fahrzeug (100) mit einer ersten Achse (104) mit Luftfederungen (106), ersten Rädern (230) und ersten Parkbremsen (332), einer zweiten Achse (108) mit Luftfederungen (110), zweiten Rädern (234) und zweiten Parkbremsen (336) sowie Betriebsbremsen (272, 374) und einem Parkbremsventil (344), das ausgebildet ist, die Parkbremsen (332, 336) festzustellen und zu lösen, und mit einer Vorrichtung (320) zur Niveauregelung, wobei eine Niveauverstellungsaktivität durch eine Kombination einer elektronischen Niveauregelung realisiert durch ein Steuergerät der elektronischen Niveauregelung ELC, einer elektronischen Parkbremse realisiert durch ein Steuergerät der elektronischen Parkbremse EPB und eines elektronischen Bremssystems realisiert durch ein Steuergerät des elektronischen Bremssystems EBS dadurch gelöst wird, dass das Steuergerät für die elektronische Niveauregelung ELC, das Steuergerät für die elektronische Parkbremse EPB und das Steuergerät für das elektronische Bremssystem EBS über eine Kommunikationsschnittstelle darüber informiert, dass das Niveau einer Karosserie (102) des Fahrzeugs (100) anzupassen ist,
**dadurch gekennzeichnet, dass**
ansprechend auf diese Information zum einen die elektronische Parkbremse EPB ausgebildet ist, um die Parkbremsen (332, 336) an allen Achsen (104, 108) des Fahrzeugs (100) zu lösen, und zum anderen das Steuergerät des elektronischen Bremssystems EBS ausgebildet ist, um eine der Achsen (104, 108) zu bremsen und die andere der Achsen (104, 108) rollen zu lassen.

## Claims

1. A two-axle vehicle (100) with a first axle (104) with air suspensions (106), first wheels (230), and first parking brakes (332); a second axle (108) with air suspensions (110), second wheels (234), and second parking brakes (336), as well as service brakes (272, 374) and a parking brake valve (344) configured to engage and release the parking brakes (332, 336), and with a device (320) for ride level control, wherein a ride level adjustment operation is performed by a combination of electronic ride level control implemented by a control unit of the electronic level control (ELC), an electronic parking brake implemented by a control unit of the electronic parking brake (EPB), and an electronic braking system implemented by a control unit of the electronic braking system (EBS), in that the control unit for the electronic level control (ELC), the control unit for the electronic parking brake (EPB), and the control unit for the electronic braking system (EBS) are informed, via a communication interface, that the ride level of a body (102) of the vehicle (100) is to be adjusted,
**characterized in that**, in response to this information, the electronic parking brake (EPB) is configured, on the one hand, to release the parking brakes (332, 336) on all axles (104, 108) of the vehicle (100), and, on the other hand, the control unit of the electronic braking system (EBS) is configured to brake one of the axles (104, 108) and allow the other of the axles (104, 108) to roll.

## Revendications

1. Véhicule à deux essieux (100) présentant un premier essieu (104) avec des suspensions pneumatiques (106), des premières roues (230) et des premiers freins de stationnement (332), un second essieu (108) avec des suspensions pneumatiques (110), des secondes roues (234) et des seconds freins de stationnement (336) ainsi que des freins de service (272, 374) et une soupape de frein de stationnement (344) qui est conçue afin de serrer et desserrer les freins de stationnement (332, 336), et avec un dispositif (320) destiné à la correction d'assiette, dans lequel une activité de réglage d'assiette est déclenchée par une combinaison d'une correction d'assiette électronique réalisée par un appareil de commande de la correction d'assiette électronique ELC, d'un frein de stationnement électronique réalisé par un appareil de commande du frein de stationnement électronique EPB et d'un système de freinage électronique réalisé par un appareil de commande du système de freinage électronique EBS, en ce que l'appareil de commande pour la correction d'assiette électronique ELC, l'appareil de commande pour le frein de stationnement électronique EPB et l'appareil de commande pour le système de freinage électronique EBS sont inconçus par le biais d'une interface de communication que l'assiette doit être adaptée à une carrosserie (102) du véhicule (100),
**caractérisé en ce qu'**en réponse à ces informations, d'une part le frein de stationnement électronique EPB est conçu afin de desserrer les freins de stationnement (332, 336) au niveau de tous les essieux (104, 108) du véhicule (100), et d'autre part l'appareil de commande du système de freinage électronique EBS est conçu afin de freiner l'un des essieux (104, 108) et de faire rouler l'autre des essieux (104, 108).
